(19) Europäisches Patentamt
European Patent Office
Office européen des brevets

(11) Veröffentlichungsnummer: **0 210 498 B1**

(12) **EUROPÄISCHE PATENTSCHRIFT**

(45) Veröffentlichungstag der Patentschrift: **15.04.92**

(51) Int. Cl.$^5$: **C08F 38/02**, C08L 49/00, C08F 291/00

(21) Anmeldenummer: **86109478.7**

(22) Anmeldetag: **11.07.86**

(54) **Verfahren zur Polymerisation von Acetylen in Gegenwart von Polymeren und polyacetylenhaltige Polymerprodukte.**

(30) Priorität: **23.07.85 DE 3526234**

(43) Veröffentlichungstag der Anmeldung:
**04.02.87 Patentblatt 87/06**

(45) Bekanntmachung des Hinweises auf die Patenterteilung:
**15.04.92 Patentblatt 92/16**

(84) Benannte Vertragsstaaten:
**CH DE FR GB IT LI NL**

(56) Entgegenhaltungen:
**EP-A- 0 080 065**
**DE-A- 3 317 825**
**DE-A- 3 403 493**
**US-A- 4 394 304**

(73) Patentinhaber: **BAYER AG**

**W-5090 Leverkusen 1 Bayerwerk(DE)**

(72) Erfinder: **Ostoja Starzewski, K.H. Aleksander, Dr.**
**Jeschkenweg 10**
**W-6368 Bad Vilbel(DE)**
Erfinder: **Witte, Josef, Dr.**
**Haferkamp 10**
**W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 210 498 B1

**Beschreibung**

Die Erfindung betrifft neue polyacetylenhaltige Polymerprodukte und ihre Herstellung durch Polymerisation des Acetylens in Gegenwart eines anderen Polymers.

Polyacetylen ist ein geeigneter Rohstoff zur Herstellung elektrischer Leiter und Halbleiter auf organischer Basis. Einen Überblick und Literaturhinweise gibt der Artikel "Polymere mit metallähnlicher Leitfähigkeit - Ein Überblick über Synthese, Struktur und Eigenschaften" von Gerhard Wegner, Angew. Chem. 93, 352 bis 371 (1981), insbesondere Seiten 354 bis 359.

Reines Polyacetylen hat jedoch gravierende Nachteile, da es instabil gegenüber Luft und nur schwer verarbeitbar ist. Aufgrund seiner Unschmelzbarkeit und Unlöslichkeit ist es beispielsweise nicht durch Extrusion zu Fäden oder Folien zu verarbeiten.

Aus USA - 4 394 304 ist bekannt, z.B. Polystyrol oder Polyethylen mit einem Ziegler Natta Katalysator zu imprägnieren und Acetylen zu polymerisieren. Ferner ist aus der Europäischen Patentanmeldung EP-80065 bekannt, filmförmiges Polyacetylen auf festen Trägermaterialien (Fäden, Fasern, Gewebe usw.) in Gegenwart von Ziegler Natta Katalysatoren herzustellen. Ziegler Natta Katalysatorsysteme, die hierzu verwendet werden können, sind in der deutschen Offenlegungsschrift DE-OS 2 912 572 genannt.

Ein Nachteil der in diesen Entgegenhaltungen genannten Verfahren ist die Verwendung der Ziegler Katalysatoren, da diese zum Beispiel ein Arbeiten in polaren Medien bzw. eine Polymerisation in Gegenwart eines polaren Polymers nicht erlauben. Zudem enthalten die in DE-OS 2 912 572 genannten Katalysatorsysteme zusätzlich Metallcarbonyle (wie Nickelcarbonyl) als Hilfsstoffe, die eine vergleichsweise hohe Toxizität aufweisen.

Es wurde nun gefunden, daß sich polyacetylenhaltige Polymerprodukte herstellen lassen, die die genannten Nachteile nicht aufweisen und dennoch elektrische Leitfähigkeit besitzen, wenn man Acetylen in Gegenwart anderer Polymere mit geeigneten Katalysatoren polymerisiert.

Gegenstand der vorliegenden Erfindung sind Reaktionsprodukte, enthaltend von 0,1 bis 99 Gew.-Teile, vorzugsweise von 1 bis 50 Gew.-Teile, Polyacetylen in hochdisperser heterogener oder homogener Verteilung und von 99,9 bis 1 Gew.-Teile, vorzugsweise von 99 bis 50 Gew.-Teile, mindestens eines von Polyacetylen verschiedenen Polymeren, erhältlich durch Polymerisation von Acetylen in organischer Lösung mindestens eines von Polyacetylen verschiedenen Polymeren und in Gegenwart von Nickelverbindungen herstellbar durch Umsetzung einer Nickel-(O)-Verbindung oder einer Verbindung, die in situ in eine Nickel-(O)-Verbindung überführt werden kann, mit Verbindungen der Formeln (I) und (II)

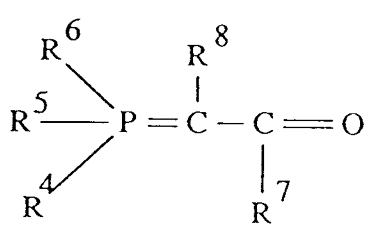

und

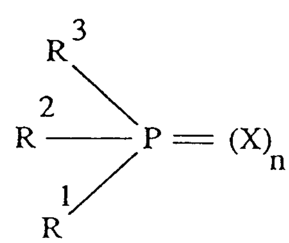

(I) (II)

worin

$R^1$, $R^2$ und $R^3$ unabhängig voneinander gegebenenfalls durch Halogen, Hydroxy, $C_1$-$C_{20}$-Alkoxy, oder $C_6$-$C_{12}$-Aryloxy substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino und gegebenenfalls substituiertes Phenoxy oder Alkoxy

X O, $NR^9$ oder

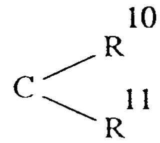

n Null oder Eins,

$R^4$, $R^5$, $R^6$, $R^7$ und $R^8$ unabhängig voneinander, gegebenenfalls durch Halogen, Hydroxy, $C_1$-$C_{20}$-Alkoxy oder $C_6$-$C_{12}$-Aryloxy substiutiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem

$R^7$ Wasserstoff,

$R^8$ Wasserstoff oder Sulfonat und

$R^9$, $R^{10}$ und $R^{11}$ unabhängig voneinander Wasserstoff, Nitrophenyl, Silyl, Halogen, Cyano oder $R^1$ bedeuten,

oder in Gegenwart von Nickelverbindungen, herstellbar durch Umsetzung einer Nickel-(O)-Verbindung oder einer Verbindung, die in situ in eine Nickel-(O)-Verbindung überführt werden kann, mit einem Addukt oder einem Gemisch aus Maleinsäureanhydrid, einer Verbindung der Formel II mit n = 0 und einer Verbindung der Formel II mit n = 0 oder 1, worin $R^1$, $R^2$ und $R^3$ die vorstehend genannte Bedeutung besitzen, polymerisiert.

Vorzugsweise wird Acetylen in einer Polymerlösung polymerisiert, wobei als Polymere alle löslichen Polymere infrage kommen, z. B. Polystyrol, Polycarbonat, Polyvinylchlorid, Polychloropren, Polyether, Polyacrylnitril, Polyvinylpyrrolidon, Polyisopren, Polyvinylalkohol, Cellulose-Derivate, z.B. Methylcellulose und Mischpolymerisate wie Acrylnitril-Styrol-Copolymere, Butadien-Acrylnitril-Copolymere, die hydriert sein können, oder Acrylnitril(Meth)acrylat-Copolymere. Als Lösungsmittel werden die für die genannten Polymere geeigneten Lösungsmittel eingesetzt.

Bevorzugt sind Polymere mit polaren Gruppen, beispielsweise Halogenatomen, Nitrilgruppen, Hydroxylgruppen, oder Carbonestergruppen, z.B. Polyvinylchlorid, Polyvinylalkohol, Polyacrylnitril und Acrylnitril enthaltende Copolymere sowie Polyvinylpyrrolidon.

Als Katalysatoren eignen sich alle Nickelkatalysatoren für die Herstellung von Polyacetylen, sofern sie nicht durch die Polymerlösung inaktiviert werden, herstellbar durch Umsetzung einer Nickel-(O)-Verbindung oder einer Verbindung, die in situ in eine Nickel-(O)-Verbindung Überführt werden kann, mit Verbindungen der Formeln (I) und (II)

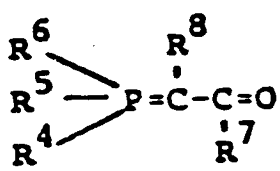

und

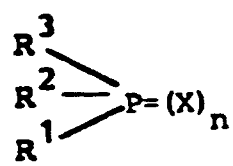

(I) (II)

worin

$R^1$, $R^2$ und $R^3$ unabhängig voneinander gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino und gegebenenfalls substituiertes Phenoxy oder Alkoxy

X O, $NR^9$ oder

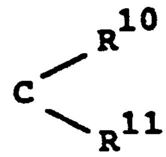

| | |
|---|---|
| n | Null oder Eins |
| $R^4$, $R^5$ , $R^6$, $R^7$ und $R^8$ | unabhängig voneinander, gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem |
| $R^7$ | Wasserstoff, |
| $R^8$ | Wasserstoff oder Sulfonat und |
| $R^9$,$R^{10}$ und $R^{11}$ | unabhängig voneinander Wasserstoff, Silyl, Nitrophenyl, Halogen, Cyano oder $R^1$ bedeuten, |

oder von Nickelverbindungen, herstellbar durch Umsetzung einer Nickel-(O)-Verbindung oder einer Verbindung, die in situ in eine Nickel-(O)-Verbindung überführt werden kann, mit einem Addukt oder einem Gemisch aus Maleinsäureanhydrid, einer Verbindung der Formel II mit n = o und einer Verbindung der Formel II mit n = 0 oder 1, worin $R^1$, $R^2$ und $R^3$ die vorstehend genannte Bedeutung besitzen.

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und $C_1$-$C_4$-Alkoxy.

$R^4$ ist vorzugsweise $C_6$-$C_{12}$-Aryl.

$R^5$, $R^6$, $R^7$ und $R^8$ sind vorzugsweise Cyclohexyl, Phenyl, Tolyl, Benzyl, Vinyl und $C_1$-$C_4$-Alkyl.

$R^7$ ist darüberhinaus bevorzugt Wasserstoff oder $C_1$-$C_4$-Alkoxi, $R^8$ darüber hinaus bevorzugt Wasserstoff oder Sulfonat.

$R^9$, $R^{10}$ und $R^{11}$ sind vorzugsweise Wasserstoff, $C_1$-$C_6$-Alkyl, Phenyl, Chlorphenyl, Nitrophenyl, $C_1$-$C_6$-Alkylphenyl, Trimethylsilyl, Chlor, Cyano, $C_2$-$C_6$-Alkenyl und Phenyl-$C_2$-$C_6$-alkenyl.

Die Nickel-Verbindungen stehen nach den vorliegenden Erkenntnissen mit der Formel (III)

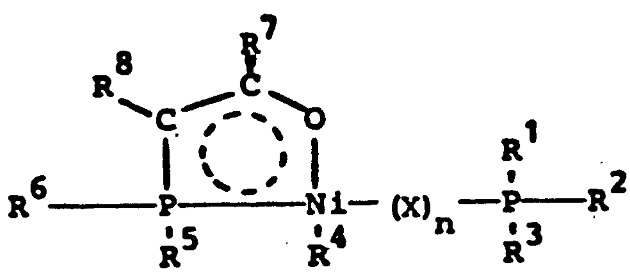

(III)

worin X, n und $R^1$ bis $R^8$ die vorstehend genannten Bedeutungen besitzen, bzw. im Falle des Maleinsäureanhydridadduktes X, n und $R^1$ bis $R^6$ die vorstehend genannte Bedeutung besitzen und $R^7$ und $R^8$ zusammen den Rest -O-CO-$CH_2$-bedeuten, in Einklang.

Bevorzugt werden pro Mol Nickel-(O)-verbindung 1 - 4 Mole der Verbindung der Formel (I) und 1 - 4 Mole der Verbindung der Formel (II) eingesetzt, besonders bevorzugt pro Mol der Nickel-(O)-verbindung 1 Mol der Verbindung der Formel (I) und 1 Mol der Verbindung der Formel (II).

Die Umsetzungstemperatur beträgt 0 - 100° C, insbesondere 20 - 70° C.

Die Reaktion wird unter Ausschluß von Sauerstoff, vorzugsweise in einem Lösungsmittel das gegenüber den Reaktanden inert sein muß, wie Benzol, Toluol, Cyclohexan und n-Hexan, durchgeführt.

Nach Beendigung der Reaktion wird der Katalysator als Feststoff gewöhnlich durch Filtration isoliert, wobei man nach Bedarf die Lösung zuvor einengt und/oder abkühlt.

Er kann auch ohne Isolierung direkt zur Polymerisation von Acetylen eingesetzt werden.

Als Nickel-(O)-Verbindungen seien beispielhaft Ni(cyclooctadien)$_2$ und Ni(allyl)$_2$ genannt.

Als Nickelverbindungen, die in situ in Nickel-(O)-Verbindungen überführt werden können seien beispielsweise aufgeführt: Ni-acetylacetonat, Ni-octanoat und Ni-stearat die mit Hilfe von üblichen Reduktionsmitteln wie Boranat, Alanat, Aluminiumalkylen oder Lithiumorganylen reduziert werden können.

Die Menge der verwendeten Nickel-Verbindung ist nicht kritisch. Typische Katalysatorkonzentrationen

liegen zwischen 10 und $10^{-6}$, vorzugsweise zwischen $10^{-2}$ und $10^{-4}$ Mol pro Liter. Die Menge an Katalysator, bezogen auf Acetylen, liegt im Bereich von 0.1 bis 10 Gewichtsprozent, vorzugsweise 0.5 bis 5 Gewichtsprozent.

Die Polymerisation kann sowohl kontinuierlich als auch diskontinuierlich durchgeführt werden.

Die Polymerisationstemperatur beträgt bevorzugt -20 bis +120 ° C, inbesondere 0 bis 100 ° C, wobei bei tiefen Temperaturen eine Aktivierung des Katalysators durch aluminiumorganische Verbindungen, beispielsweise durch Alkoxyaluminiumdialkyl oder Aluminiumtrialkyl zu empfehlen ist.

Die Polymerisation kann bei Normaldruck durchgeführt werden, jedoch ist auch das Polymerisieren unter Druck möglich. Das Acetylen kann ohne weitere Reinigung aus der Druckflasche entnommen und verwendet werden. Bei acetonempfindlichen Katalysatoren empfiehlt es sich, im Acetylen etwa enthaltenes Aceton zuvor in einer Kühlfalle auszufrieren.

Die erfindungsgmäßen polyacetylenhaltigen Polymerprodukte zeigen makroskopisch entweder eine heterogene oder eine homogene Polyacetylenverteilung in der Polymermatrix. Die heterogene Verteilung äußert sich durch diskrete schwarze Teilchen von Polyacetylen in der Polymermatrix, allerdings in hochdisperser Verteilung. Die homogene Verteilung äußert sich durch eine durchgehend gelb-braune bis tiefblaue Färbung des Polymerproduktes.

Alle polyacetylenhaltigen Polymerprodukte lassen sich ohne Verlust ihrer elektrischen Eigenschaften in üblicher Weise zu Formkörpern, beispielsweise Fäden oder Folien verarbeiten.

Die elektrischen Eigenschaften ändern sich bei längerer Lagerung nicht.

Das Polyacetylen kann in üblicher Weise, beispielsweise mit Iod, dotiert werden. Durch die Dotierung läßt sich die elektrische Leitfähigkeit nach Bedarf etwa bis zu zehn Zehnerpotenzen steigern, wodurch die Produkte für einen weiten Anwendungsbereich vom Nichtleiter über den Halbleiter bis zum elektrischen Leiter einsetzbar werden. Der formale Dotierungsgrad ergibt sich aus der Gewichtszunahme durch die Iodierung.

Katalysatorherstellung

5 mmol Bis-cylooctadien-nickel (O) in 100 ml trockenem stickstoffgesättigtem Toluol werden unter Stickstoff mit 5 mmol Benzoyl-methylen-triphenylphosphoran und 5 mmol Methylen-trimethylphosphoran gemischt. Unter intensivem Rühren erwärmt man ca. 2 Stunden auf 40 bis 60 ° C. Die dunkelgelb-braune Lösung wird filtriert. Diese Lösung bzw. ein Teil derselben wird bei der nachfolgenden Acetylenpolymerisation eingesetzt.

Beispiel 1

Allgemeine Synthesevorschrift

In einem 1 l Reaktionskolben (Gaseinleitung, Tropftrichter ohne Druckausgleich mit $N_2$-Zuführung, Rührer, Innenthermometer, Rückflußkühler mit Blasenzähler) wurden unter Inertgas 200 g 10 gew.-%ige Polymerlösung (entgast, $N_2$-gesättigt) vorgelegt und auf 60 ° C erwärmt. Anschließend wurden 20 ml DMSO injiziert. 0,5 mmol des vorstehend beschriebenen Katalysators in 10 ml Toluol wurden unter $N_2$-Druck zugetropft und ein gleichmäßiger Strom von Acetylengas (Trockeneis/Aceton) wurde während 2 Stunden eingeleitet. Ein aliquoter Teil der Lösung wurde, am Rotationsverdampfer zur Trockne eingeengt, mit Ethanol gewaschen und im Ölpumpenvakuum getrocknet. Die Gewichtszunahme ist im Matrix-Polymer gebildetes Polyacetylen (PAC), welches gewöhnlich 10 - 20 Gew.-% ausmachte. Ein weiteres Aliquot der Reaktionslösung wurde mit soviel Iod versetzt, daß pro Mol polymerisiertes Acetylen 1 Mol $I_2$ zugegen war, und über Nacht gerührt. Anschließend wurde wieder am Rotationsverdampfer zur Trockne eingeengt, der Iodüberschuß mit Alkohol ausgewaschen und das dotierte Matrix-Polyacetylen im Ölpumpenvakuum getrocknet. Der formale Dotierungsgrad lag zwischen 0,1 und 0,3 Iodatome pro Formeleinheit CH. Die Materialien besaßen elektrische Eigenschaften, wie sie etwa für antistatische Zwecke erforderlich sind.

| Polymer | $c_{PAC}$ (Gew.-%) | Dotierungsgrad PAC | Leitfähigkeit ( -1 . cm-1) | Farbe der undotierten Matrix-PAC-Lösung |
|---|---|---|---|---|
| Polystyrol | - | - | $2 \cdot 10^{-14}$ | schwarz, |
| | 13 | 0,1 | $4 \cdot 10^{-6}$ | heterogen |
| Naturkautschuk | - | - | $1 \cdot 10^{-13}$ | schwarz, |
| | 9 | | $1 \cdot 10^{-7}$ | heterogen |
| Polychloropren | - | - | $4 \cdot 10^{-9}$ | braun |
| | 10 | 0,3 | $2 \cdot 10^{-7}$ | |
| Polyvinylchlorid | - | - | $1 \cdot 10^{-13}$ | rotbraun, |
| | 16 | 0,1 | $2 \cdot 10^{-7}$ | homogen |
| Polycarbonat | - | - | $1 \cdot 10^{-13}$ | braun, |
| | 18 | 0,1 | $1 \cdot 10^{-7*}$ | homogen |
| Polyethylacrylat | - | - | $1 \cdot 10^{-11}$ | schwarz, |
| | 18 | | $1 \cdot 10^{-6}$ | heterogen |
| Polymethylmethacrylat | - | - | $1 \cdot 10^{-13}$ | schwarz, |
| | 20 | | $2 \cdot 10^{-6*}$ | heterogen |

*) nach 6-monatiger Lagerung unverändert

Beispiel 2

In 50 ml Polyacrylnitril (PAN)-Lösung 10 gew.-%ig in DMF, entgast und $N_2$-gesättigt, wurden unter Rühren bei 60 °C 0,25 mmol des Katalysators nach Beispiel 1 in 5 ml DMF injiziert. Acetylen, welches durch eine mit Trockeneis/Aceton gekühlte Wendel strömte, wurde während 1 Stunde eingeleitet.

Die homogene Reaktionslösung war braun gefärbt. Nach Entfernen des Lösungsmittels erhielt man ein Polymer, das nach IR-Untersuchungen 18 mol % PAC enthielt.

Beispiel 3

Es wurde entsprechend Beispiel 2 verfahren, aber die Katalysatormenge auf 0,5 mmol erhöht. Die homogene Reaktionslösung war tiefblau. Das UV-Spektrum zeigte ein Absorptionsmaximum bei 17,4 kk. Das Polymer enthielt 47 mol-% PAC.

Außer durch Entfernen des Lösungsmittels konnte das PAC-PAN-Polymer auch durch Fällung mit Toluol, anschließender Toluol/Hexan-Wäsche und Vakuumtrocknung isoliert werden. Das so erhaltene

Matrix-Polyacetylen war in DMF, in DMSO und anderen hochpolaren Solventien wieder löslich.

## Patentansprüche

1. Reaktionsprodukte, enthaltend von 0,1 bis 99 Gew.-Teile Polyacetylen in hochdisperser heterogener oder homogener Verteilung und von 99,9 bis 1 Gew.-Teile mindestens eines von Polyacetylen verschiedenen Polymeren, erhältlich durch Polymerisation von Acetylen in organischer Lösung mindestens eines von Polyacetylen verschiedenen Polymeren und in Gegenwart von Nickelverbindungen herstellbar durch Umsetzung einer Nickel-(O)-Verbindung oder einer Verbindung, die in situ in eine Nickel-(O)-Verbindung überführt werden kann, mit Verbindungen der Formeln (I) und (II)

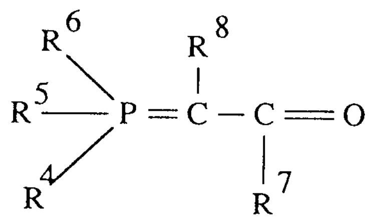

und

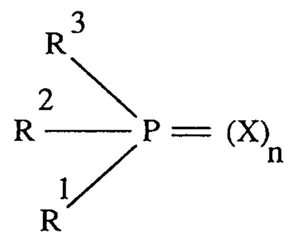

(I) (II)

worin

| | |
|---|---|
| $R^1$, $R^2$ und $R^3$ | unabhängig voneinander gegebenenfalls durch Halogen, Hydroxy, $C_1$-$C_{20}$-Alkoxy, oder $C_6$-$C_{12}$-Aryloxy substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino und gegebenenfalls substituiertes Phenoxy oder Alkoxy |
| X | O, $NR^9$ oder 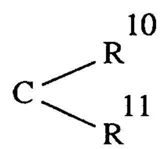 |
| n | Null oder Eins, |
| $R^4$, $R^5$, $R^6$, $R^7$ und $R^8$ | unabhängig voneinander, gegebenenfalls durch Halogen, Hydroxy, $C_1$-$C_{20}$-Alkoxy oder $C_6$-$C_{12}$-Aryloxy substiutiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem |
| $R^7$ | Wasserstoff, |
| $R^8$ | Wasserstoff oder Sulfonat und |
| $R^9$, $R^{10}$ und $R^{11}$ | unabhängig voneinander Wasserstoff, Nitrophenyl, Silyl, Halogen, Cyano oder $R^1$ bedeuten, |

oder in Gegenwart von Nickelverbindungen, herstellbar durch Umsetzung einer Nickel-(O)-Verbindung oder einer Verbindung, die in situ in eine Nickel-(O)-Verbindung überführt werden kann, mit einem Addukt oder einem Gemisch aus Maleinsäureanhydrid, einer Verbindung der Formel II mit n = 0 und einer Verbindung der Formel II mit n = 0 oder 1, worin $R^1$, $R^2$ und $R^3$ die vorstehend genannte Bedeutung besitzen,

polymerisiert.

2. Reaktionsprodukte nach Anspruch 1, enthaltend von 1 bis 50 Gew.-Teile Polyacetylen und von 99 bis

50 Gew.-Teile mindesens eines anderen Polymeren.

**3.** Reaktionsprodukte nach Anspruch 1 bis 2 wobei das von Polyacetylen verschiedene Polymer polare Gruppen aufweist.

**4.** Reaktionsprodukte nach Anspruch 1 bis 2, wobei das von Polyacetylen verschiedene Polymer ausgewählt ist aus der Gruppe Polyvinylchlorid, Polyvinylalkohol, Polyacrylnitril, Copolymere enthaltend Acrylnitril und Polyvinylpyrrolidon.

**5.** Verfahren zur Herstellung von Polymeren gemäß Anspruch 1, dadurch gekennzeichnet, daß man Acetylen in organischer Losung eines von Polyacetylen verschiedenen Polymers und in Gegenwart von Nickelverbindungen herstellbar durch Umsetzung einer Nickel-(O)-Verbindung oder einer Verbindung, die in situ in eine Nickel-(O)-Verbindung überführt werden kann, mit Verbindungen der Formeln (I) und (II)

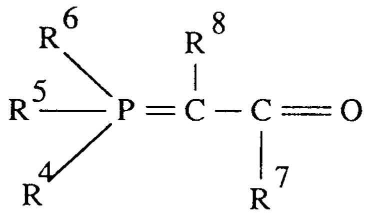

und

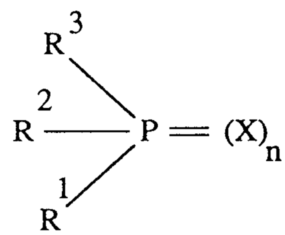

(I) (II)

worin

| | |
|---|---|
| $R^1$, $R^2$ und $R^3$ | unabhängig voneinander gegebenenfalls durch Halogen, Hydroxy, $C_1$-$C_{20}$-Alkoxy oder $C_6$-$C_{12}$-Aryloxy substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino und gegebenenfalls substituiertes Phenoxy oder Alkoxy |
| X | O, $NR^9$ oder 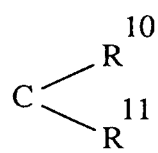 |
| n | Null oder Eins, |
| $R^4$, $R^5$, $R^6$, $R^7$ und $R^8$ | unabhängig voneinander, gegebenenfalls durch Halogen, Hydroxy, $C_1$-$C_{20}$-Alkoxy oder $C_6$-$C_{12}$-Aryloxy substiutiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem |
| $R^7$ | Wasserstoff, |
| $R^8$ | Wasserstoff oder Sulfonat und |
| $R^9$, $R^{10}$ und $R^{11}$ | unabhängig voneinander Wasserstoff, Nitrophenyl, Silyl, Halogen, Cyano oder $R^1$ bedeuten, |

oder in Gegenwart von Nickelverbindungen, herstellbar durch Umsetzung einer Nickel-(O)-Verbindung oder einer Verbindung, die in situ in eine Nickel-(O)-Verbindung überführt werden kann, mit einem Addukt oder einem Gemisch aus Maleinsäureanhydrid, einer Verbindung der Formel II mit n = 0 und einer Verbindung der Formel II mit n = 0 oder 1, worin $R^1$, $R^2$ und $R^3$ die vorstehend genannte Bedeutung besitzen,

polymerisiert.

6. Verfahren nach Anspruch 5, wobei

$R^1$, $R^2$ und $R^3$ $C_1$-$C_6$-Alkyl, Cyclohexyl, Phenyl, Tolyl, Benzyl, Di-$C_1$-$C_4$-alkylamino, Phenoxy und $C_1$-$C_4$-Alkxoy,

| | |
|---|---|
| $R^4$ | $C_6$-$C_{12}$-Aryl, |
| $R^5$, $R^6$, $R^7$ und $R^8$ | Cyclohexyl, Phenyl, Tolyl, Benzyl, Vinyl und $C_1$-$C_4$-Alkyl, |
| $R^7$ | darüber hinaus Wasserstoff oder $C_1$-$C_4$-Alkoxy, |
| $R^8$ | darüber hinaus Wasserstoff oder Sulfonat und |
| $R^9$, $R^{10}$ und $R^{11}$ | Wasserstoff, $C_1$-$C_6$-Alkyl, Phenyl, Chlorphenyl, Nitrophenyl, $C_1$-$C_6$-Alkylphenyl, Trimethylsilyl, Chlor, Cyano, $C_2$-$C_6$-Alkenyl und Phenyl-$C_2$-$C_6$-alkenyl bedeuten. |

7. Verfahren nach Anspruch 5, dadurch gekennzeichnet, daß bei einer Temperatur von -20 bis +120°C, vorzugsweise von 0 bis 100°C polymerisiert wird.

8. Verfahren nach Anspruch 5, dadurch gekennzeichnet, daß man als von Polyacetylen verschiedene Polymere solche mit polaren Gruppen verwendet.

**Claims**

1. Reaction products containing 0.1 to 99 parts by weight polyacetylene in highly disperse, heterogeneous or homogeneous distribution and 99.9 to 1 part by weight of at least one polymer different from polyacetylene obtainable by polymerization of acetylene in organic solution of at least one polymer different from polyacetylene and in the presence of nickel compounds obtainable by reaction of a nickel(O) compound or a compound convertible **in situ** into a nickel(O) compound with compounds corresponding to formulae (I) and (II)

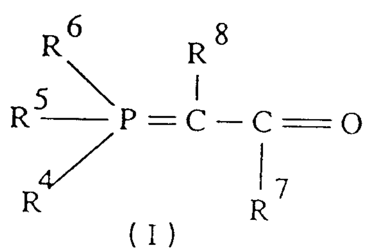
(I)

and

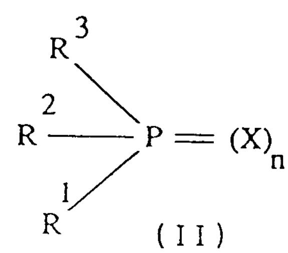
(II)

in which

| | |
|---|---|
| $R^1$, $R^2$ and $R^3$ | independently of one another represent optionally halogen-, hydroxy-, $C_{1-20}$-alkoxy- or $C_{6-12}$-aryloxy-substituted $C_{1-20}$ alkyl, $c_{6-12}$ aryl or $C_{3-8}$ cycloalkyl, also $C_{6-12}$-aryl-$C_{1-20}$-alkyl, $C_{1-20}$-alkyl-$C_{6-12}$-aryl, $C_{1-20}$-alkyl-$C_{3-8}$-cycloalkyl, $C_{6-12}$-aryl-$C_{3-8}$-cycloalkyl, $C_{2-6}$ alkenyl, $C_{6-2}$-aryl-$C_{2-6}$-alkenyl, di-$C_{1-4}$-alkylamino and optionally substituted phenoxy or alkoxy, |
| X | represents O, $NR^9$ or 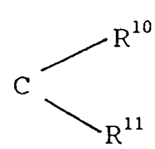 |
| n | = 0 or 1, |
| $R^4$, $R^5$, $R^6$, $R^7$ and $R^8$ | independently of one another represent halogen-, hydroxy-, $C_{1-20}$-alkoxy- or $c_{6-2}$-aryloxy-substituted $C_{1-20}$ alkyl, $C_{6-12}$ aryl, $c_{2-30}$ alkenyl or $C_{3-8}$ |

| | |
|---|---|
| | cycloalkyl, also $C_{6-12}$-aryl-$C_{1-20}$-alkyl, $C_{1-20}$-alkyl-$C_{6-12}$-aryl, halogen, hydroxy, $C_{1-20}$ alkoxy or $C_{6-12}$ aryloxy, in addition to which |
| $R^7$ | may be hydrogen, |
| $R^8$ | may be hydrogen or sulfonate and |
| $R^9$, $R^{10}$ and $R^{11}$ | independently of one another represent hydrogen, nitrophenyl, silyl, halogen, cyano or $R^1$, |

or in the presence of nickel compounds obtainable by reaction of a nickel(O) compound or a compound convertible **in situ** into a nickel(O) compound with an adduct or a mixture of maleic anhydride, a compound corresponding to formula II with n = 0 and a compound corresponding to formula II with n = 0 or 1, in which $R^1$, $R^2$ and $R^3$ are as defined above.

2. Reaction products as claimed in claim 1 containing 1 to 50 parts by weight polyacetylene and 99 to 50 parts by weight of at least one other polymer.

3. Reaction products as claimed in claims 1 and 2, in which the polymer different from polyacetylene contains polar groups.

4. Reaction products as claimed in claims 1 and 2, in which the polymer different from polyacetylene is selected from the group consisting of polyvinyl chloride, polyvinyl alcohol, polyacrylonitrile, copolymers containing acrylonitrile and polyvinyl pyrrolidone.

5. A process for the production of the polymers claimed in claim 1, characterized in that acetylene is polymerized in an organic solution of a polymer different from polyacetylene and in the presence of nickel compounds obtainable by reaction of a nickel(O) compound or a compound convertible **in situ** into a nickel(O) compound with compounds corresponding to formulae (I) and (II)

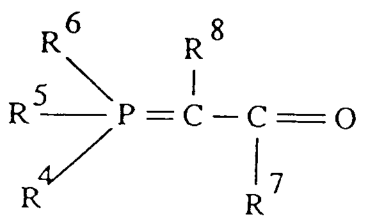

(I)

and

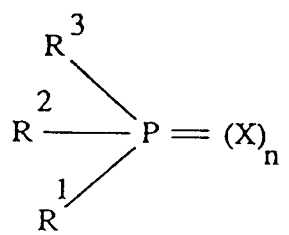

(II)

in which

| | |
|---|---|
| $R^1$, $R^2$ and $R^3$ | independently of one another represent optionally halogen-, hydroxy-, $C_{1-20}$-alkoxy- or $C_{6-12}$-aryloxy-substituted $C_{1-20}$ alkyl, $C_{6-12}$ aryl or $C_{3-8}$ cycloalkyl, also $C_{6-12}$-aryl-$C_{1-20}$-alkyl, $C_{1-20}$-alkyl-$C_{6-12}$-aryl, $C_{1-20}$-alkyl-$C_{3-8}$-cycloalkyl, $C_{6-12}$-aryl-$C_{3-8}$-cycloalkyl, $C_{2-6}$ alkenyl, $C_{6-12}$-aryl-$C_{2-6}$-alkenyl, di-$C_{1-4}$-alkylamino and optionally substituted phenoxy or alkoxy, |
| X | represents O, $NR^9$ or |

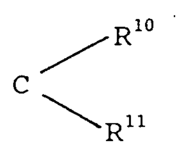

| | |
|---|---|
| n | = 0 or 1, |
| $R^4$, $R^5$, $R^6$, $R^7$ and $R^8$ | independently of one another represent halogen-, hydroxy-, $C_{1-20}$-alkoxy- or $C_{6-12}$-aryloxy-substituted $C_{1-20}$ alkyl, $C_{6-12}$ aryl, $C_{2-30}$ alkenyl or $C_{3-8}$ cycloalkyl, also $C_{6-12}$-aryl-$C_{1-20}$-alkyl, $C_{1-20}$-alkyl-$C_{6-12}$-aryl, halogen, hydroxy, $C_{1-20}$ alkoxy or $C_{6-12}$ aryloxy, in addition to which |
| $R^7$ | may be hydrogen, |
| $R^8$ | may be hydrogen or sulfonate and |

$R^9$, $R^{10}$ and $R^{11}$ independently of one another represent hydrogen, nitrophenyl, silyl, halogen, cyano or $R^1$,

or in the presence of nickel compounds obtainable by reaction of a nickel(O) compound or a compound convertible **in situ** into a nickel(O) compound with an adduct or a mixture of maleic anhydride, a compound corresponding to formula II with n = 0 and a compound corresponding to formula II with n = 0 or 1, in which $R^1$, $R^2$ and $R^3$ are as defined above.

**6.** A process as claimed in claim 5, in which
$R^1$, $R^2$ and $R^3$ represent $C_{1-6}$ alkyl, cyclohexyl, phenyl, tolyl, benzyl, di-$C_{1-4}$-alkylamino, phenoxy and $C_{1-4}$ alkoxy,
$R^4$ is $C_{6-12}$ aryl,
$R^5$, $R^6$, $R^7$ and $R^8$ represent cyclohexyl, phenyl, tolyl, benzyl, vinyl and $C_{1-4}$ alkyl, in addition to which $R^7$ may be hydrogen or $C_{1-4}$ alkoxy and
$R^8$ may be hydrogen or sulfonate and
$R^9$, $R^{10}$ and $R^{11}$ represent hydrogen, $C_{1-6}$ alkyl, phenyl, chlorophenyl, nitrophenyl, $C_{1-6}$ alkylphenyl, trimethylsilyl, chlorine, cyano, $C_{2-6}$ alkenyl and phenyl-$C_{2-6}$-alkenyl.

**7.** A process as claimed in claim 5, characterized in that the polymerization is carried out at a temperature of -20 to +120 °C and preferably at a temperature of 0 to 100 °C.

**8.** A process as claimed in claim 5, characterized in that polymers containing polar groups are used as the polymers different from polyacetylene.

## Revendications

**1.** Produits de réaction contenant 0,1 à 99 parties en poids de polyacétylène à l'état hautement dispersé hétérogène ou homogène et 99,9 à 1 parties en poids d'au moins un polymère différent d'un polyacétylène, obtenu par polymérisation d'acétylène dans une solution organique d'au moins un polymère différent d'un polyacétylène et en présence de composés de nickel pouvant être préparés par réaction d'un composé de nickel-(O) ou d'un composé qui peut être converti in situ en un composé de nickel-(O), avec des composés de formules (I) et (II)

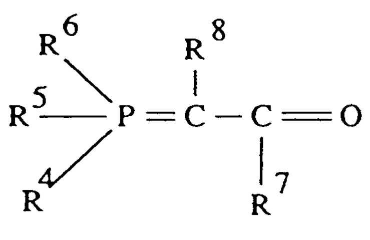

et

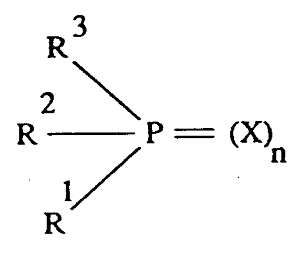

(I) (II)

dans lesquelles

$R^1$, $R^2$ et $R^3$ représentent, indépendamment les uns des autres, un groupe alkyle en $C_1$ à $C_{20}$, aryle en $C_6$ à $C_{12}$ ou cycloalkyle en $C_3$ à $C_8$ portant éventuellement un substituant halogéno, hydroxy, alkoxy en $C_1$ à $C_{20}$ ou aryloxy en $C_6$ à $C_{12}$, en outre un groupe (aryle en $C_6$ à $C_{12}$)-(alkyle en $C_1$ à $C_{20}$), (alkyle en $C_1$ à $C_{20}$)-(aryle en $C_6$ à $C_{12}$), (alkyle en $C_1$ à $C_{20}$)-(cycloalkyle en $C_3$ à $C_8$), (aryle en $C_6$ à $C_{12}$)-(cycloalkyle en $C_3$ à $C_8$), alcényle en $C_2$ à $C_6$, (aryle en $C_6$ à $C_{12}$)-(alcényle en $C_2$ à $C_6$), di(alkyle en $C_1$ à $C_4$)amino et phénoxy ou alkoxy éventuellement substitué

X représente O,$NR^9$ ou

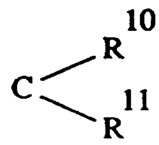 ev.

| | |
|---|---|
| n | a la valeur zéro ou un, |
| $R^4$, $R^5$, $R^6$, $R^7$ et $R^8$ | représentent, indépendamment les uns des autres, un groupe alkyle en $C_1$ à $C_{20}$, aryle en $C_6$ à $C_{12}$, alcényle en $C_2$ à $C_{30}$ ou cycloalkyle en $C_3$ à $C_8$ portant éventuellement un substituant halogéno, hydroxy, alkoxy en $C_1$ à $C_{20}$ ou aryloxy en $C_6$ à $C_{12}$, en outre un groupe (aryle en $C_6$ à $C_{12}$)-(alkyle en $C_1$ à $C_{20}$, (alkyle en $C_1$ à $C_{20}$)-(aryle en $C_6$ à $C_{12}$), un halogène, un groupe hydroxy, alkoxy en $C_1$ à $C_{20}$ ou aryloxy en $C_6$ à $C_{12}$, en outre |
| $R^7$ | est l'hydrogène, |
| $R^8$ | est l'hydrogène ou un groupe sulfonate et |
| $R^9$, $R^{10}$ et $R^{11}$ | représentent, indépendamment les uns des autres, l'hydrogène ou un groupe nitrophényle, silyle, halogéno, cyano ou $R^1$, |

ou en présence de composés de nickel, pouvant être préparés par réaction d'un composé de nickel-(O) ou d'un composé qui peut être converti in situ en un composé de nickel-(O), avec un produit d'addition ou un mélange d'anhydride maléique, d'un composé de formule II dans laquelle n est égal à 0 et d'un composé de formule II dans laquelle n est égal à 0 ou 1, où $R^1$, $R^2$ et $R^3$ ont la définition mentionnée ci-dessus.

**2.** Produits de réaction suivant la revendication 1, contenant 1 à 50 parties en poids de polyacétylène et 99 à 50 parties en poids d'au moins un autre polymère.

**3.** Produits de réaction suivant les revendications 1 et 2, dans lesquels le polymère différent d'un polyacétylène présente des groupes polaires.

**4.** Produits de réaction suivant les revendications 1 et 2, dans lesquels le polymère différent d'un polyacétylène est choisi dans le groupe comprenant un polymère de chlorure de vinyle, un polymère d'alcool vinylique, un polymère d'acrylonitrile, des copolymères contenant de l'acrylonitrile et une polyvinylpyrrolidone.

**5.** Procédé de production de polymères suivant la revendication 1, caractérisé en ce qu'on polymérise de l'acétylène dans la solution organique d'un polymère différent d'un polyacétylène et en présence de composés de nickel pouvant être préparés par réaction d'un composé de nickel-(O) ou d'un composé qui peut être converti en un composé de nickel-(O) in situ, avec des composés de formules (I) et (II)

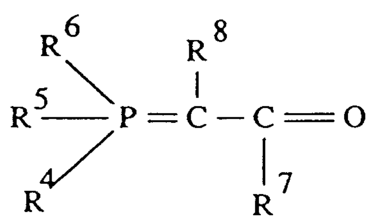

(I)

et

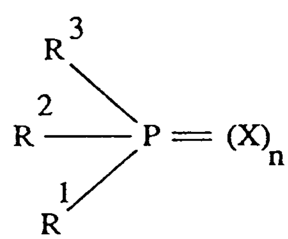

(II)

dans lesquelles

| | |
|---|---|
| $R^1$, $R^2$ et $R^3$ | représentent, indépendamment les uns des autres, un groupe alkyle en $C_1$ à $C_{20}$, aryle en $C_6$ à $C_{12}$ ou cycloalkyle en $C_3$ à $C_8$ portant éventuellement un substituant halogéno, hydroxy, alkoxy en $C_1$ à $C_{20}$ ou aryloxy en $C_6$ à $C_{12}$, en outre un groupe (aryle en $C_6$ à $C_{12}$)-(alkyle en $C_1$ à $C_{20}$), (alkyle en $C_1$ à $C_{20}$)-(aryle en $C_6$ à $C_{12}$), (alkyle en $C_1$ à $C_{20}$)-(cycloalkyle en $C_3$ à $C_8$), (aryle en $C_6$ à $C_{12}$)-(cycloalkyle en $C_3$ à $C_8$), alcényle en $C_2$ à $C_6$, |

(aryle en $C_6$ à $C_{12}$)-(alcényle en $C_2$ à $C_6$), di(alkyle en $C_1$ à $C_4$)amino et phénoxy ou alkoxy facultativement substitué,

X représente O,$NR^9$ ou

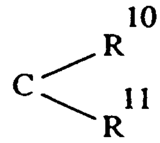

n a la valeur zéro ou un,

$R^4$, $R^5$, $R^6$, $R^7$ et $R^8$ représentent, indépendamment les uns des autres, un groupe alkyle en $C_1$ à $C_{20}$, aryle en $C_6$ à $C_{12}$, alcényle en $C_2$ à $C_{30}$ ou cycloalkyle en $C_3$ à $C_8$ portant facultativement un substituant halogéno, hydroxy, alkoxy en $C_1$ à $C_{20}$ ou aryloxy en $C_6$ à $C_{12}$, en outre un groupe (aryle en $C_6$ à $C_{12}$)-(alkyle en $C_1$ à $C_{20}$), (alkyle en $C_1$ à $C_{20}$)-(aryle en $C_6$ à $C_{12}$), halogéno, hydroxy, alkoxy en $C_1$ à $C_{20}$ ou aryloxy en $C_6$ à $C_{12}$, en outre

$R^7$ représente l'hydrogène,

$R^8$ est l'hydrogène ou un groupe sulfonate et

$R^9$, $R^{10}$ et $R^{11}$ représentent, indépendamment les uns des autres, l'hydrogène ou un groupe nitrophényle, silyle, un halogène, un groupe cyano ou $R^1$,

ou en présence de composés de nickel, pouvant être préparés par réaction d'un composé de nickel-(O) ou d'un composé qui peut être converti in situ en un composé de nickel-(O), avec un produit d'addition ou un mélange d'anhydride d'acide maléique, d'un composé de formule II dans laquelle n est égal à 0 et d'un composé de formule II dans laquelle n est égal à 0 ou 1, où $R^1$, $R^2$ et $R^3$ possèdent la définition mentionnée ci-dessus.

**6.** Procédé suivant la revendication 5, dans lequel

$R^1$, $R^2$ et $R^3$ représentent des groupes alkyle en $C_1$ à $C_6$, cyclohexyle, phényle, tolyle, benzyle, di(alkyle en $C_1$ à $C_4$)amino, phénoxy et alkoxy en $C_1$ à $C_4$,

$R^4$ est un groupe aryle en $C_6$ à $C_{12}$,

$R^5$, $R^6$, $R^7$ et $R^8$ sont des groupes cyclohexyle, phényle, tolyle, benzyle, vinyle et alkyle en $C_1$ à $C_4$,

$R^7$ représente en outre l'hydrogène ou un groupe alkoxy en $C_1$ à $C_4$,

$R^8$ représente en outre l'hydrogène ou un groupe sulfonate et

$R^9$, $R^{10}$ et $R^{11}$ représentent l'hydrogène, un groupe alkyle en $C_1$ à $C_6$, phényle, chlorophényle, nitrophényle, (alkyle en $C_1$ à $C_6$)phényle, triméthylsilyle, le chlore, un groupe cyano, alcényle en $C_2$ à $C_6$ et phényl-(alcényle en $C_2$ à $C_6$).

**7.** Procédé suivant la revendication 5, caractérisé en ce qu'on conduit la polymérisation à une température de -20 à +120 °C, de préférence de 0 à 100 °C.

**8.** Procédé suivant la revendication 5, caractérisé en ce qu'on utilise comme polymères différents d'un polyacétylène des polymères portant des groupes polaires.